# FASCICULE DE BREVET EUROPEEN

(11) **EP 0 533 530 B1**
(45) Date de publication et mention de la délivrance du brevet: **21.12.1994**
(21) Numéro de dépôt: 92402461.5
(22) Date de dépôt: 09.09.1992
(51) Int. Cl.: B64C 25/58, F16F 7/12

(54) **Amortisseur anti-crash relevable**
Einfahrbarer anti-crash Stossdämpfer
Retractable anti-crash shock-absorber

(30) Priorité: 17.09.1991 FR 9111437
(43) Date de publication de la demande: 24.03.1993
(73) Titulaire: MESSIER BUGATTI, F-78140 Velizy Villacoublay (FR)
(72) Inventeur: Derrien, Michel, F-78000 Versailles (FR)
(74) Mandataire: Fruchard, Guy

(56) Documents cités:
- EP-A- 0 072 323
- FR-A- 2 608 242
- GB-A- 2 020 780

## Description

La présente invention concerne un amortisseur anti-crash relevable, en particulier pour un hélicoptère.

On sait que les véhicules aériens à décollage vertical, notamment les hélicoptères, doivent comprendre des amortisseurs assurant non seulement la fonction d'amortissement des chocs lors d'un atterrissage normal, mais également une fonction d'absorption d'énergie dans le cas d'un atterrissage d'urgence, la fonction d'absorption d'énergie ayant pour effet d'éviter si possible un endommagement du véhicule proprement dit, et en tout état de cause, de diminuer les contraintes corporelles pour les passagers du véhicule. Il est également souvent demandé que l'amortisseur soit rétractable afin de permettre un relèvement du train d'atterrissage dans un logement approprié pendant le vol.

Selon l'invention, on propose un amortisseur anti-crash relevable comportant un caisson ; une tige coulissante montée pour coulisser par rapport au caisson et délimiter avec celui-ci une chambre d'amortissement contenant un gaz sous pression et un liquide d'amortissement dans lequel s'étend une cloison transversale équipée de moyens de laminage, et une chambre de relevage reliée à un organe d'alimentation en liquide de relevage ; une tige plongeuse délimitant une chambre d'abaissement reliée à un organe d'alimentation en liquide d'abaissement et dans laquelle est disposé un piston d'abaissement ayant une face en contact avec le liquide d'amortissement ; et un tube anti-crash monté pour coulisser par rapport à la tige coulissante et comportant des moyens d'absorption d'énergie.

Selon une version avantageuse de l'invention, les moyens d'absorption d'énergie comportent un tube composite disposé à l'intérieur du tube anti-crash et ayant une extrémité en appui sur la tige coulissante et une extrémité en appui à l'intérieur du tube anti-crash. De préférence, l'amortisseur comporte une goupille à seuil de rupture solidarisant le tube anti-crash avec la tige coulissante.

D'autres caractéristiques et avantages de l'invention apparaîtront encore à la lecture de la description qui suit de deux modes de réalisation particuliers non limitatifs de l'invention en liaison avec les figures ci-jointes parmi lesquelles :
- la figure 1 est une vue en coupe axiale d'un premier mode de réalisation de l'invention.
- la figure 2 est une vue en coupe axiale d'un second mode de réalisation de l'invention.

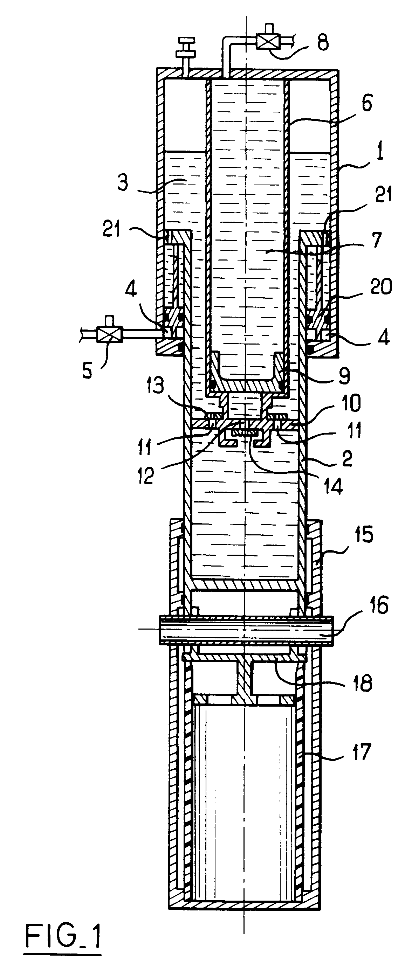

En référence à la figure 1, l'amortisseur anti-crash relevable selon l'invention comporte un caisson 1 dans lequel une tige coulissante 2 est montée pour coulisser et délimite avec le caisson une chambre d'amortissement 3 contenant un gaz sous pression et un liquide d'amortissement, et une chambre de relevage 4 reliée à un organe d'alimentation 5 en liquide de relevage. Une tige plongeuse 6 est fixée à l'intérieur du caisson et délimite une chambre d'abaissement 7 reliée à un organe d'alimentation 8 en liquide d'abaissement. Un piston d'abaissement 9 est disposé dans la chambre d'abaissement 7 et sépare le liquide d'abaissement 7 du liquide d'amortissement contenu dans la chambre d'amortissement 3. A sa partie inférieure, la tige plongeuse 6 porte une cloison 10 qui s'étend transversalement à la chambre d'amortissement 3 au sein du liquide d'amortissement. La cloison transversale 10 comporte des orifices de laminage 11 assurant un laminage du liquide d'amortissement lors des déplacement de la tige coulissante 2 par rapport au caisson 1 et un orifice de passage 12 assurant un écoulement rapide du liquide d'amortissement lors des mouvements de descente du piston d'abaissement 9. Un clapet de laminage annulaire 13 est disposé en regard des orifices de laminage 11 pour assurer un laminage en détente plus important que le laminage en compression, et un clapet de laminage 14 est disposé en regard de l'orifice de passage 12 pour assurer un laminage en compression en cas de crash associé à une panne hydraulique ne permettant pas d'alimenter la chambre d'abaissement 7 ainsi qu'il sera vu plus loin.

Un tube anti-crash 15 est monté à la partie inférieure de la tige coulissante 2 pour coulisser par rapport à celle-ci et est rendue solidaire de la tige coulissante par une goupille à seuil de rupture 16. Un tube en matériau composite 17 est disposé longitudinalement à l'intérieur du tube anti-crash 15. Le tube composite 17 prend appui à son extrémité inférieure sur le fond du tube anti-crash 15 et à son extrémité supérieure sur une pièce de centrage 18 solidaire de la tige coulissante 2.

Un piston de relevage annulaire 20 est disposé dans la chambre de relevage 4. Le piston de relevage 20 a sa face inférieure en contact avec le liquide de relevage et sa face supérieure en contact avec le liquide d'amortissement qui peut pénétrer au-dessus du piston de relevage 20 par des orifices 21.

Le fonctionnement de l'amortisseur selon l'invention est le suivant : en fonctionnement normal, c'est-à-dire lorsque le train est abaissé, l'organe d'alimentation en liquide de relevage 5 est à l'échappement et l'organe d'alimentation en liquide d'abaissement 8 est fermé après que la chambre d'abaissement 7 ait été remplie de liquide d'abaissement jusqu'à ce que le piston 9 soit en butée à l'extrémité inférieure de la tige plongeuse 6 comme illustré sur la figure 1. Le piston d'abaissement 9 est donc verrouillé hydrauliquement en position basse.

Lors d'un atterrissage ou d'un décollage, la tige coulissante 2 se déplace dans le caisson 1 en fonction des efforts qui sont appliqués à la tige coulissante et qui sont équilibrés par la force exercée par le gaz sous pression dans la chambre d'amortissement 3. Lors de ces mouvements, le liquide d'amortissement est laminé par les orifices 11 et le clapet de laminage 13.

En cas de crash train abaissé, la goupille 16 se rompt lorsque l'effort de compression sur la tige coulissante atteint une valeur supérieure au seuil de rupture et le tube anti-crash 15 se déplace alors par rapport à la tige coulissante 2 en provoquant l'écrasement du tube composite 17 qui absorbe une partie de l'énergie due au crash.

Pour un relevage du train associé à l'amortisseur, l'organe d'alimentation 8 en liquide d'abaissement est mis à l'échappement et du liquide de relevage est amené par l'organe d'alimentation 5. Sous l'effet du liquide de relevage, le piston 20 est poussé vers le haut et provoque la rétraction de la tige coulissante 2 à l'intérieur du caisson. Du liquide d'amortissement contenu dans la chambre d'amortissement 3 est alors repoussé à travers le clapet de laminage 14 et fait remonter le piston 9 à l'intérieur de la tige plongeuse 6.

En cas de panne hydraulique, l'organe d'alimentation 5 en liquide de relevage et l'organe d'alimentation 8 en liquide d'abaissement sont mis à l'échappement (par un circuit de sécurité connu en soi non représenté). Le poids de la structure d'atterrissage et la pression du gaz dans la chambre d'amortissement 3 tendent alors à faire redescendre l'amortisseur dans sa position d'utilisation. Dans ce mouvement, le liquide d'amortissement contenu entre le piston d'abaissement 9 et la cloison transversale 10 s'écoule rapidement à travers l'orifice de passage 12 tandis que le liquide d'amortissement en contact avec le gaz sous pression est laminé par le clapet 13. La majeure partie du liquide d'amortissement contenu sous le piston d'abaissement 9 revient donc dans la partie inférieure de la chambre d'amortissement 3 jusqu'à une extension complète de l'amortisseur. Au moment de l'atterrissage proprement dit, qu'il soit contrôlé ou en crash, l'amortisseur se comprime et le liquide d'amortissement tend à remonter à travers la cloison transversale. La remontée de liquide d'amortissement sous le piston d'abaissement 9 (qui n'est pas verrouillé en raison de la panne hydraulique) est toutefois limité par le clapet de laminage 14 de sorte que dans ce mouvement la majorité du liquide d'amortissement passe à travers les orifices de laminage 11 et l'enfoncement de l'amortisseur est donc essentiellement déterminé par l'écoulement à travers les orifices 11 et l'augmentation de pression du gaz qui en résulte. En cas d'atterrissage trop brutal le débit à travers les orifices 11 et le clapet de laminage 14 n'est pas suffisant et la résistance à l'enfoncement qui en résulte provoque une rupture de la goupille 16 et la mise en oeuvre du tube d'absorption d'énergie 17.

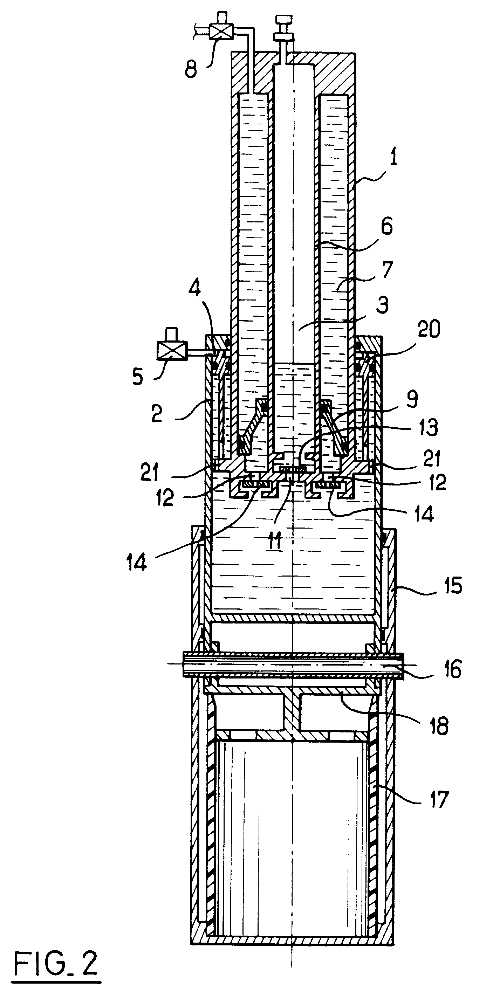

La figure 2 illustre une variante de réalisation de l'amortisseur selon l'invention où les éléments ayant une fonction identique à ceux de la figure 2 ont été référencés avec les mêmes références numériques. On constate aisément que cette variante de réalisation ne diffère du premier mode de réalisation illustré que par la disposition relative de certains des composants de l'amortisseur. En particulier, la tige coulissante 2 est cette fois montée à l'extérieur du caisson 1 et la chambre d'amortissement 3 s'étend cette fois à l'intérieur de la tige plongeuse 6 au lieu de s'étendre autour de celle-ci comme dans le mode de réalisation précédent. Le piston d'abaissement 9 est alors un piston annulaire entourant la tige plongeuse 6.

Bien entendu l'invention n'est pas limitée aux modes de réalisation décrits et est susceptible de variantes qui apparaîtront à l'homme de métier. En particulier, on peut prévoir un abaissement et un relevage sans laminage en supprimant l'orifice de laminage 12 et le clapet de laminage 14 et en réalisant un orifice de liaison largement dimensionné dans la cloison transversale 10 entre la chambre d'amortissement 3 et le piston 9. On peut également supprimer le piston de relevage 20 à condition bien entendu de supprimer simultanément les orifices de communication 21 et d'assurer une étanchéité entre la tige coulissante 2 et le caisson 1. L'utilisation d'un piston de relevage 20 présente toutefois l'avantage d'éviter une cavitation dans la conduite d'alimentation en liquide de relevage lors d'une rétraction de la tige coulissante à l'intérieur du caisson 1 en phase normale d'utilisation de l'amortisseur.

On peut également remplacer le tube composite 17 par un autre moyen d'absorption d'énergie, par exemple par un gaz sous pression maintenu à une pression supérieure à la pression normale du gaz comprimé dans la chambre d'amortissement 3.

## Revendications

1. Amortisseur anti-crash relevable comportant un caisson (1) ; une tige coulissante (2) montée pour coulisser par rapport au caisson et délimiter avec celui-ci une chambre d'amortissement (3) contenant un gaz sous pression et un liquide d'amortissement dans lequel s'étend une cloison transversale (10) équipée de moyens de laminage (11, 13), et une chambre de relevage (4) reliée à un organe d'alimentation (5) en liquide de relevage ; caractérisé en ce qu'il comporte une tige plongeuse (6) délimitant une chambre d'abaissement (7) reliée à un organe d'alimentation (8) en liquide d'abaissement et dans laquelle est disposé un piston d'abaissement (9) ayant une face en contact avec le liquide d'amortissement; et un tube anti-crash (15) monté pour coulisser par rapport à la tige coulissante (2) et comportant des moyens d'absorption d'énergie (17).

2. Amortisseur anti-crash relevable selon la revendication 1, caractérisé en ce que les moyens d'absorption d'énergie comprennent un tube composite (17) disposé à l'intérieur du tube anti-crash (15) et ayant une extrémité en appui sur la tige coulissante (2) et une extrémité en appui à l'intérieur du tube anti-crash.

3. Amortisseur anti-crash relevable selon la revendication 2 caractérisé en ce qu'il comporte une goupille (16) à seuil de rupture solidarisant le tube anti-crash avec la tige coulissante.

4. Amortisseur anti-crash relevable selon la revendication 1, caractérisé en ce qu'il comporte des moyens de laminage (14) entre la chambre d'amortissement (3) et le piston d'abaissement (9).

5. Amortisseur anti-crash relevable selon la revendication 1, caractérisé en ce qu'un piston de relevage (20) est disposé dans la chambre de relevage (4).

## Claims

1. A raisable anti-crash shock absorber comprising: a strut (1); a sliding rod (2) mounted to slide relative to the strut and to co-operate therewith to define both a raising chamber (4) connected to a member (5) for feeding raising liquid, and a shock absorbing chamber (3) containing both a gas under pressure and a shock absorbing liquid in which there extends a transverse partition (10) fitted with throttling means (11, 13); the shock absorber being characterized in that it further comprises a dip rod (6) defining a lowering chamber (7) connected to a member (8) for feeding it with lowering liquid and in which a lowering piston (9) is disposed, which piston has a face that is in contact with the shock absorbing liquid; and an anti-crash tube (15) slidably mounted relative to the sliding rod (2) and including energy-absorbing means (17).

2. A raisable anti-crash shock absorber according to claim 1, characterized in that the energy-absorbing means comprise a composite tube (17) disposed inside the anti-crash tube (15) and having one end bearing against the sliding rod (2) and another end bearing against the inside of the anti-crash tube.

3. A raisable anti-crash shock absorber according to claim 2, characterized in that it includes a shear pin (16) having a rupture threshold securing the anti-crash tube to the sliding rod.

4. A raisable anti-crash shock absorber according to claim 1, characterized in that it includes throttling means (14) between the shock absorbing chamber (3) and the lowering piston (9).

5. A raisable anti-crash shock absorber according to claim 1, characterized in that a raising piston (20) is disposed in the raising chamber (4).

## Patentansprüche

1. Einziehbarer Aufprallschutzdämpfer mit einem Gehäuse (1); einer Gleitstange (2), die relativ zu dem Gehäuse verschiebbar gelagert ist und mit dem Gehäuse eine Dämpfungskammer (3), in der Druckgas und eine Dämpfungsflüssigkeit enthalten sind und in der sich eine mit Drosseleinrichtungen (11,13) versehene transversale Zwischenwand (10) erstreckt, und eine Hubkammer (4) begrenzt, die mit einem Organ (5) zur Zufuhr von Hubflüssigkeit verbunden ist; gekennzeichnet durch eine Tauchstange (6), die eine Senkkammer (7) begrenzt, welche mit einem Organ (8) zur Zufuhr von Senkflüssigkeit verbunden ist und in welcher ein Senkkolben (9) angeordnet ist, von welchem sich eine Fläche in Kontakt mit der Senkflüssigkeit befindet, und ein Aufprallschutzrohr (15), das relativ zur Gleitstange (2) verschiebbar angeordnet ist und Mittel (17) zur Aufnahme von Energie besitzt.

2. Einziehbarer Aufprallschutzdämpfer nach Anspruch 1, dadurch gekennzeichnet, daß die Mittel zur Aufnahme von Energie ein im Inneren des Aufprallschutzrohres (15) angeordnetes Verbundrohr (17) umfassen, wovon sich ein Ende an der Gleitstange (2) und ein Ende im Inneren des Aufprallschutzrohres abstützt.

3. Einziehbarer Aufprallschutzdämpfer nach Anspruch 2, gekennzeichnet durch einen bruchempfindlichen Bolzen (16), der das Aufprallschutzrohr mit der Gleitstange verbindet.

4. Einziehbarer Aufprallschutzdämpfer nach Anspruch 1, gekennzeichnet durch Drosseleinrichtungen (14) zwischen der Dämpfungskammer (3) und dem Senkkolben (9).

5. Einziehbarer Aufprallschutzdämpfer nach Anspruch 1, dadurch gekennzeichnet, daß ein Hubkolben (20) in der Hubkammer (4) angeordnet ist.
